# EUROPEAN PATENT APPLICATION

(11) **EP 2 160 067 A1**
(43) Date of publication of application: **03.03.2010**
(21) Application number: 08015280.4
(22) Date of filing: 29.08.2008
(51) Int. Cl.: H04W 80/04, H04L 29/06

(54) **Detection of the mobility management function used by the network**

(71) Applicant: Panasonic Corporation, Kadoma-shi Osaka 571-8501 (JP)
(72) Inventor: Weniger, Kilian, Dr., 63225 Langen (DE); Ikeda, Shinkichi, Chuo-ku Osaka 540-6207 (JP); Bachmann, Jens, 63225 Langen (DE); Velev, Genadi, 63225 Langen (DE)
(74) Representative: Grünecker, Kinkeldey, Stockmair & Schwanhäusser Anwaltssozietät

(57) **Abstract**

The invention relates to a method and mobile node capable of detecting whether or not the network to which the mobile node is attached is using a network-based mobility management function for the mobile node or not. In order to enable a mobile node to detect whether the network is using a network-based mobility function for the mobile node, upon establishment of a PDN connection or IP session, the mobile node sends a probe message to the network destined to itself and determines based on the modifications of the probe message returned to the mobile node whether the network is using a network-based mobility function for the mobile node or not.

## Description

### FIELD OF THE INVENTION

The invention relates to a method and mobile node capable of detecting whether or not the network to which the mobile node is attached is using a network-based mobility management function for the mobile node or not. Further, the invention also relates to the definition of formats of probe messages used in this detection process and the adaption of the respective nodes participating in the detection process.

### TECHNICAL BACKGROUND

Communications systems more and more evolve towards an Internet Protocol (IP)-based network. They consist of many interconnected networks, in which speech and data is transmitted from one terminal to another terminal in pieces, so-called packets. Packets are routed to the destination by routers in a connection-less manner. IP packets consist of IP header and payload information. The header comprises among other things source and destination IP address of the IP packet. For scalability reasons a large IP network is usually divided in subnets and uses a hierarchical addressing scheme. Hence, an IP address does not only identify the corresponding terminal, but additionally contains location information (current subnet) about this terminal. Typically this location information is also referred to as the prefix of the IP address. With additional information provided by routing protocols, routers in the packet-switched network are able to identify the next router towards a specific destination.

If a terminal is mobile, a so-called Mobile Node (MN), and moves between subnets, it must change its IP address to a topological correct address using the prefix of the subnet (domain) because of the hierarchical addressing scheme (if no other mechanism is provided allowing the mobile node to keep its address - see the discussion of Proxy Mobile IP below). However, since connections on higher-layers such as TCP connections on the transport layer of the OSI model are defined with the IP addresses (and ports) of the communicating nodes, the connection breaks, if one of the nodes changes its IP address, e.g. due to movement.

Mobile IPv6 (MIPv6) as specified by Johnson et al., "Mobility Support in IPv6", IETF RFC 3775, June 2004 (available at http://www.ietf.org and incorporated herein by reference) is an IP-based mobility protocol that enables mobile nodes to move between subnets in a manner transparent for higher layers and applications, i.e. without breaking higher-layer connections. Therefore, a mobile node has two IP addresses configured: a care-of address (CoA) and a home address (HoA). The mobile node's higher layers use the home address for communication with the communication partner, who is associated with the destination terminal, the so-called corresponding node (CN). This address does not change and serves the purpose of identification of the mobile node. Topologically, the home address belongs to the home network (HN) of the mobile node.

In contrast, the care-of address changes on every movement that results in a subnet change (new prefix being advertised) and is used as the locator for the routing infrastructure. Topologically, the care-of address belongs to the network the mobile node is currently attached to. One out of a set of anchors, so-called home agents (HA), located on the home link maintains a mapping of the mobile node's care-of address to mobile node's home address and redirects incoming traffic for the mobile node to its current location. Reasons for having a set of home agents instead of a single home agent are redundancy and load balancing.

Mobile IPv6 currently defines two modes of operation: bi-directional tunneling and route optimization. If bi-directional tunneling is used, data packets sent by the corresponding node and addressed to the home address of the mobile node are intercepted by the home agent in the home network and tunneled to the care-of address of the mobile node. Data packets sent by the mobile node are reverse-tunneled to the home agent, which decapsulates the packets and sends them to the corresponding node. For this operation, the home agent must be informed about the current location (i.e. the care-of address) of the mobile node. Therefore, the mobile node sends location updates messages, which are called binding update (BU) messages in MIPv6, to the home agent. Binding update messages contain a sequence number, so that the home agent can identify the freshness and correct ordering of binding update messages. These binding update messages are sent over an IPsec security association and thus are cryptographically protected to provide data origin authentication and integrity protection. This requires that mobile node and home agent share a secret key. Hence, the home agent only accepts binding update messages for the mobile node's home address that are cryptographically protected with the corresponding shared key.

Recently, Mobile IPv6 has been extended to enable mobile nodes to dynamically bootstrap with home agents (see Giaretta et al., "Mobile IPv6 bootstrapping in split scenario", RFC 5026, October 2007, available at http://www.ietf.org and incorporated herein by reference). Bootstrapping includes discovering a home agent, setting up the security associations with the home agent for securing the Mobile IP signaling and configuring a corresponding home address.

An IPsec security association may be dynamically established using IKEv2. IKEv2 is defined in Kaufman, "Internet Key Exchange (IKEv2) Protocol", IETF RFC 4306, December 2005; Arkko et al., "Using IPsec to Protect Mobile IPv6 Signaling Between Mobile Nodes and Home Agents", IETF RFC 3776, June 2004 and Devarapalli et al., "Mobile IPv6 Operation with IKEv2 and the Revised IPsec Architecture", IETF RFC 4877, April 2007 (all three documents being available at http://www.ietf.org and being incorporated herein by reference). Another protocol allowing the establishment of an security association for securing the Mobile IP signaling is the authentication protocol by Patel et al., "Authentication Protocol for Mobile IPv6", IETF RFC 4285, January 2006, available at http://www.ietf.org and incorporated herein by reference.

Different methods exist for discovering a home agent by the mobile node: One option is that the mobile node is pre-configured with a DNS name for the home agent and queries DNS (Domain Name System) to get a list of home agent IP addresses (see Giaretta et al., "Mobile IPv6 bootstrapping in split scenario", RFC 5026, October 2007 available at http://www.ietf.org and incorporated herein by reference). Another option is that the mobile node is pre-configured with an anycast home agent address suffix and sends an DHAAD message (see IETF RFC 3775) or an IKE_SA_INIT message via anycast to a group of home agents (see Dupont et al., "IKEv2-based Home Agent Assignment in Mobile IPv6/NEMO Bootstrapping", IETF Internet Draft, draft-dupont-ikev2-haassign-02.txt, January 2007 available at http://www.ietf.org and incorporated herein by reference). The prefix for the anycast home agent address can be pre-configured on the mobile node or dynamically obtained from the network. Further, it can be equal to the mobile node's home address prefix.

With the anycast concept, multiple home agents have the same anycast address assigned and a message sent to this anycast is delivered to any of the home agents that are part of the anycast group. Typically the message is delivered to the home agent that is located closest to the sender. DNS-based and anycast-based home agent discovery can also be combined. Therefore, the mobile node is pre-configured with a DNS (Domain Name Service) name and DNS returns an anycast address.

In a deployment scenario, where the access network operator and the home network operator are the same or have a trust relationship, a home agent address for the mobile node can be assigned by the home or visited network, delivered to the access network via the AAA (Authentication, Authorization and Accounting) protocol and assigned to the mobile node using the DHCP protocol (Dynamic Host Configuration Protocol - for IPv4 see R. Droms, "Dynamic Host Configuration Protocol", IETF RFC 2131, March 1997; for IPv6 see R. Droms et al., "Dynamic Host Configuration Protocol for IPv6 (DHCPv6)", IETF RFC 3315, July 2003; both documents available at http://www.ietf.org and incorporated herein by reference). With this approach, the mobile node queries the DHCP server to obtain a home agent IP address (see Chowdhury et al., "MIP6-bootstrapping for the Integrated Scenario", IETF Internet Draft, draft-ietf-mip6-bootstrapping-integrated-dhc-06.txt, April 2008 and Hee Jin Jang et al., "DHCP Option for Home Information Discovery in MIPv6", IETF Internet Draft, draft-ietf-mip6-hiopt-17.txt, May 2008 both available at http://www.ietf.org and incorporated herein by reference).

### Client-based versus Network-based Mobility Management

Mobile IP is a host- or client-based protocol, since the mobility management signaling is between the host/client and the home agent. Hence, MIP is also sometimes also referred to as Client Mobile IP, Client MIP or CMIP. In order allow the user equipment to attach to IPv4 as well as IPv6 networks, an CMIP extension called Dual Stack MIPv6 or DSMIP (see Soliman, "Mobile IPv6 Support for Dual Stack Hosts and Routers", IETF Internet Draft, draft-ietf-mext-nemo-v4traversal-05.txt, July 2008, available at http://www.ietf.org and incorporated herein by reference) can be implemented by the mobile node or user equipments. The term DSMIP is sometimes used interchangeably for CMIP or MIPv6 in this document.

Another approach becoming popular is a network-based approach for IP mobility management. An entity in the visited access network acts as a proxy for the mobile node and manages the mobility for the mobile node, including the signaling of location updates to the home agent. Network-based mobility management is considered to have some advantages like less signaling overhead over the air and mobility support for simple IP nodes (i.e. non-Client MIP-capable nodes). A commonly identified drawback is that it requires support from the visited access network.

The IETF (Internet Engineering Task Force) is working on such approach for localized mobility management based on the Mobile IP protocol. Since a network entity is acting as a proxy on behalf of the mobile node, the protocol is called Proxy Mobile IP (Proxy MIP or PMIP). There are variants for IPv6 called PMIPv6 (see Gundavelli et al., "Proxy Mobile IPv6", IETF RFC 5213, August 2008, available at http://www.ietf.org and incorporated herein by reference) and variants for IPv4 called Proxy MIPv4 (see Leung et al., "WiMAX Forum/3GPP2 Proxy Mobile IPv4", IETF Internet Draft, draft-leung-mip4-proxy-mode-02.txt, December 2007 available at http://www.ietf.org and incorporated herein by reference).

PMIPv6 introduces a new logical entity called mobile access gateway (MAG), which is typically co-located with the access router (AR) the mobile node is currently attached to and which sends binding update messages on behalf of a the mobile node. The Proxy MIP-home agent is an extended Client MIP-home agent anchor and is called local mobility anchor (LMA). Since a local mobility anchor includes home agent functionality, the local mobility anchor is sometimes also denoted a home agent herein. Binding update messages sent by the mobile access gateway are marked with a flag, so that they can be identified as proxy binding update (PBU) messages by the local mobility anchor and can be distinguished from binding update messages sent by the mobile node (i.e. CMIP signaling messages).

Furthermore, proxy binding update messages contain, among others, a network access identifier (NAI) option, a home prefix option, and a timestamp option. The NAI option contains the NAI (as specified in Aboda et al., "The Network Access Identifier", IETF RFC 4282, December 2005, available at http://www.ietf.org and incorporated herein by reference) of the mobile node, which has the form of "username@realm" and which is used to identify the mobile node.

The home prefix option contains the home address or home prefix of the mobile node. In Proxy MIPv6, every mobile node typically gets a unique prefix assigned. When the mobile node attaches to a new mobile access gateway, the mobile access gateway sends a proxy binding update to the local mobility anchor to register the mobile node's new location. The proxy binding update can be triggered, e.g., by a successful network authentication, by DHCP (Dynamic Host Configuration Protocol) messages or others.

Further, the mobile access gateway announces the mobile node's home prefix to the mobile node. Consequently, the mobile node's IP stack thinks it is at home as long as it moves within the Proxy MIP domain and does not notice that it changes subnets. A tunnel between local mobility anchor and mobile access gateway is established and all traffic from/to the mobile node is forwarded through this tunnel.

The 3GPP SAE system (see 3GPP TS 23.401, "General Packet Radio Service (GPRS) enhancements for Evolved Universal Terrestrial Radio Access Network (E-UTRAN) access", version 8.2.0 and 3GPP TS 23.402, "Architecture enhancements for non-3GPP accesses", version 8.2.0 both available at http://www.3gpp.org and incorporated herein by reference) specifies both (Client) MIPv6 and Proxy MIPv6 for mobility management for handovers between access technologies. The home agent and local mobility anchor functions are part of the public data network gateway (PDN-GW), the mobile node functions are part of the user equipment (equivalent to a mobile node) and the mobile access gateway functions are part of the evolved Packet Data Gateway (ePDG), access gateway and access routers of non-3GPP networks.

The network may or may not support PMIP (i.e., the mobile node's access router may or may not support MAG functionality) and, if the network supports PMIP, it may or may not provide PMIP service to mobile node. PMIP was originally designed to work transparent to mobile node, but in some scenarios it may be helpful if the mobile node would know that it receives PMIP service from network.

One example is IP Mobility Mode Selection (IPMS) (see 3GPP TS 23.402): Both mobile node and network may support multiple mobility management mechanisms (MIPv6, PMIPv6). The mobile node needs to know which mobility management mechanism was selected by the network for a specific PDN connection or IP session in order for the mobile node to decide whether to trigger MIPv6 registration procedure or not. For example if the network would not use PMIP service and the mobile node would not know that and would use the assigned address instead of the MIP home address for the application then session continuity is not guaranteed. In the current 3GPP SAE system, either CMIP or PMIP service is used for a mobile node, never both simultaneously.

Currently, there are two possibilities how the mobile node learns the mobility management mode chosen by the network. First, the network may explicitly signal the selected mobility management protocol to the mobile node. However, depending on deployment, operator policy and access technology, this is not always possible and hence the explicit indication is optional. A second possibility is that the mobile node initiates MIPv6 bootstrapping to find out whether network has selected MIP or PMIP for the mobile node by comparing the locally assigned prefix with the home prefix assigned during MIPv6 bootstrapping. Since the mobile node is actually detecting whether it is at home, this procedure is called home link detection procedure. Only if the prefixes are different, i.e., the mobile node is not at home, the mobile node assumes that the network has selected MIP and the mobile node must perform the MIP procedures. This works, because in the current 3GPP standardization PMIP is only used on the home link. Hence, if the prefixes are the same, the mobile node may assume that PMIP service is used in the network. However, the bootstrapping mechanism introduces a lot of unnecessary overhead and delay in case PMIP was selected by the network, since MIP bootstrapping requires multiple round trips signaling exchange and MIP is actually not used after the detection in this case. Furthermore, this mechanism does not work anymore, if advanced scenarios will be supported, where PMIP can be used also on a foreign link or PMIP and CMIP can be used simultaneously.

### SUMMARY OF THE INVENTION

One object of the invention enable a mobile node attaching to an network to detect whether the network uses a network-based mobility management function for the mobile node or whether the mobile node needs to manage its mobility by itself by using a client-based mobility management function if it desires to ensure session continuity. A further object is to design this method so that the required signaling via the mobile node's air interface resources can be reduced and/or the time required for signaling to enable mobility management supported movement of the mobile terminal is reduced.

At least one of the objects is solved by the subject matter of the independent claims. Advantageous embodiments are subject to the dependent claims.

One of the aspects of the invention is to enable the mobile node to detect the mobility management function used for the mobile node by the network. The basic approach is thereby to have the mobile node send a probe message to the network destined to the mobile node. By detecting the changes in the transmitted and the received probe message the mobile terminal concludes on the mobility management function used by the network.

In one example, the mobile node may detect the mobility management function used by the network based on the number of hops traversed by the probe message when being routed from the mobile to the network and back to the mobile node. In order to monitor the hop count of the probe message, the probe message may be sent as an IP packet. Based on the hop count field in the IP header of the received probe message, the mobile node can conclude on the mobility management function used by the network.

In another example, the mobile node may detect the mobility management function used by the network also based on a probe message sent by the mobile node to the network and being destined to the mobile node. The mobile node checks whether an indication of the use of a network-based mobility management function was added to the probe message when routed through a network entity using a network-based mobility management function for the mobile node. For instance, instead of the hop count the probe message may include a flag or a field in the probe message header or payload is modified by the local mobility anchor or the mobile access gateway in case a network-based mobility management function is utilized. Accordingly the status of the flag or the field in the probe message indicates to the mobile node the mobility management function used by the network.

Both solutions discussed in the two examples above may be combined. Furthermore, in both examples the mobile node is capable of determining the mobility management function used by the network based on a modification of the probe message by one or more network nodes when being routed from mobile node through the network and back to the mobile node. In the first example, the mobile node checks the increase in the hop count field, while in the second example the mobile node checks whether the flag or field in the probe message has been modified or not by the local mobility anchor or the mobile access gateway.

According to the aspects above, one embodiment of the invention provides a method for detecting the IP mobility management function used by a network. The mobile node transmits a probe message to the network in form of an IP packet including an IP header, wherein the IP header of the probe message destines the probe message to an IP address of the mobile terminal. Routing in the network returns the probe message to the mobile node, which is receiving the probe message from the network. By comparing the transmitted probe message to the received probe message, the mobile node can detect the mobility management function used by the network.

In one exemplary embodiment of the invention, this detection is based on the hop count comprised in the IP hop count field of the IP header the mobile node detects whether the network uses a network-based mobility management function or if not, whether the mobile node needs to use a client-based mobility management function to enable session continuity.

In another embodiment of the invention, the detection is based on the mobile node observing an indication of the use of a network-based mobility management function was added to the probe message when routed through a network entity using a network-based mobility management function. For example, one of the intermediate nodes in the network could toggle a flag in the probe message or could modify a field of the IP header to indicate the use of a network-based mobility management function.

In a further embodiment of the invention, the mobile node initiates client-based bootstrapping (to establish e.g. an IPsec security association to a home agent serving the mobile node in the mobile node's home network and get a home address assigned) and address registration procedure (e.g. by sending a binding update to register the new care-of address of the mobile node at the home agent), in response to detecting the network to use no network-based mobility management function.

Depending on the implementation of the mobile node's protocol stack, it may happen that the probe message is routed internally in the mobile node and is not sent to via the network due to the IP address of the mobile node being indicated as the destination address of the probe message. In order to assure that the probe message is routed through the network, one embodiment of the invention proposes to tunnel the probe message to an access router in the network to which the mobile node is attached. In another embodiment, the probe message is sent to a link layer address of an access router in the network to which the mobile node is attached, although the destination address of the probe message is indicating a mobile node's IP address. It should be noted that when tunneling the probe message to an access router in the network to which the mobile node is attached, the IP destination address of the tunneled probe message (i.e. the access router's IP address) is mapped to corresponding link layer address of the access router during IP-to-MAC address mapping.

According to a further embodiment, the mobile node detects whether the network uses a network-based mobility management function for the mobile node or not is based on the difference of the hop count between transmitting and receiving the probe message by the mobile node. More specifically, in one example, the network-based mobility management function is detected, if the hop count increased by more than a threshold value between transmitting and receiving the probe message at the mobile node, and the mobile node needs to implement a client-based mobility management function otherwise, if session continuity should be supported. For example, if the hop count is changing by more than one between sending and receiving the probe message by/at the mobile node, network-based mobility management may be assumed by the mobile node.

In some situations, the mobile node does not send the probe message, if there are other indications or circumstances present that allow the mobile node to conclude on the mobility management function used by the network. For instance, in one embodiment the mobile node sends the probe message only if one or more of the following conditions are met:
- the time period between authentication of the mobile node by the network and address assignment to the mobile node by the network is longer than a threshold time period,
- the mobility management function used by the network is know from previous attachment to the network

For example, if the mobile node is attaching to an network using no network-based mobility, the time difference between finishing network authentication of the mobile node upon attachment to the network and receiving the first router advertisement that is offering the local address prefix may be small (i.e. smaller than a threshold time period), while in an network using network-based mobility, in this example Proxy MIPv6, the time span may be longer in view of the mobile access gateway (access router) having to obtain the mobile node's address prefix before advertising same in the network.

In a further embodiment the mobile node is performing an authentication procedure with the network to authenticate the mobile node in the network upon attachment thereto. The authentication is thereby performed prior to establishing IP layer connectivity to the network.

In another embodiment of the invention, the detection of the IP mobility management function used by a network is performed upon initial attachment of the mobile node to the network, upon establishing a new IP session or upon assignment of a new IP address by the network to the mobile node.

Another embodiment of the invention is related to a mobile node for detecting the IP mobility management function used by a network. The mobile node comprises a transmitter for transmitting a probe message with IP header to the network - wherein the probe message is destined to an IP address of the mobile terminal and comprises a IP hop count field - and a receiver receiving the probe message from the network. The mobile node further includes a processing unit for detecting based on the hop count comprised in the IP hop count field, whether the network uses a network-based mobility management function or not.

In another embodiment of the invention, the mobile further comprises means to perform the steps of the method for detecting the IP mobility management function used by a network according to one of the various embodiments discussed herein.

A further embodiment of the invention relates to a computer-readable medium storing instructions that, when executed by a processor of the mobile node, cause the mobile node to detect the IP mobility management function used by an network by transmitting a probe message with IP header to the network, wherein the probe message is destined to an IP address of the mobile terminal and comprises a IP hop count field, receiving the probe message from the network, and detecting based on the hop count comprised in the IP hop count field, whether the network uses a network-based mobility management function for the mobile node or not.

The computer-readable medium according another embodiment is further storing instructions that, when executed by the processor of the mobile node, cause the mobile node to perform the steps of the method for detecting the IP mobility management function used by a network according to one of the various embodiments discussed herein.

### BRIEF DESCRIPTION OF THE FIGURES

In the following the invention is described in more detail in reference to the attached figures and drawings. Similar or corresponding details in the figures are marked with the same reference numerals.
- **Fig.1**: shows the routing of a probe message according to an exemplary embodiment of the invention in a network using network-based mobility,
- **Fig. 2**: shows the routing of a probe message according to an exemplary embodiment of the invention in a network using client-based mobility
- **Figs. 3 & 4**: show exemplary formats of a probe message according to different embodiment of the invention,
- **Fig. 5**: shows the format of an IP packet for tunneling a probe message from the mobile node to the access router (AR/MAG) of network according to an exemplary embodiment of the invention,
- **Fig. 6**: shows the IP-to-Link Layer address mapping for probe messages according to an exemplary embodiment of the invention,
- **Fig. 7**: shows an exemplary signaling procedure according to an embodiment of the invention, where a mobile node attaches to a network using a network-based mobility management for the mobile node,
- **Fig. 8**: shows an exemplary signaling procedure according to an embodiment of the invention, where a mobile node attaches to a network using no network-based mobility management for the mobile node, and
- **Fig. 9**: shows an exemplary network architecture according to an exemplary embodiment of the invention, where a 3GPP-based user equipment is attaching to a trusted non-3GPP access network, which uses network-based mobility management is locally within the access network.

### DETAILED DESCRIPTION OF THE INVENTION

The following paragraphs will describe various embodiments of the invention. For exemplary purposes only, most of the embodiments are outlined in relation to a communication network using Client MIPv6 or Proxy MIPv6 as discussed in the Background Art section above, but the invention is not limited to the use of these protocols in this particular exemplary communication network.

Accordingly, also the terminology used herein mainly bases on the terminology used by the IETF in the standardization of Mobile IPv6 and Proxy MIPv6 and further the terminology used in the 3GPP when discussing 3GPP-specific features. However, the terminology and the description of the embodiments with respect to Mobile IPv6, Proxy MIPv6 or 3GPP system specific features is not intended to limit the principles and ideas of the inventions to only such systems and protocols.

The explanations given in the Technical Background section above are intended to better understand the specific exemplary embodiments described herein and should not be understood as limiting the invention to the described specific implementations of processes and functions in the mobile communication network. Nevertheless, the improvements proposed herein may be readily applied in the protocols/systems described in the Technical Background section and may in some embodiments of the invention also make use of standard and improved procedures of theses protocols/systems.

In the following a definition of several terms frequently used in this document will be provided.

A mobile node is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or nodes.

Typically, an interface of a node is assigned one IP address. However, it would also be possible to assign multiple IP addresses to a single interface. Further, in case of a node comprising plural functional entities, one or more addresses may be associated to a logical interface of a respective functional entity.

Generally, each network is identified by at least one number e.g. a so-called prefix. This number allows for routing of packets to the nodes in the network, i.e., serves the purpose of a locator. Furthermore, this number refers to a pool of identifiers that can be used by the nodes in the network. An address in a network is an identifier out of the pool of identifiers and at the same time a locator in the routing infrastructure. For example in IPv6, the number of a network is the IPv6 prefix and the address in a network is the IPv6 address composed of the IPv6 prefix and an IPv6 host part. In different networks, for example in a home network and a foreign network different addresses are used.

In the embodiments of the invention described below the IPv6 protocol will be assumed to form (at least a part of) the network layer (Layer 3) in the protocol stack.

A home network (i.e. the home link) of a mobile node is typically identified by the location of the home agent at which the mobile node registers its care-of address(es) for a given home address of the mobile node. A home address is an IP address assigned to a mobile node typically used as the permanent IP address of the mobile node. This address has a prefix of the mobile node's home network. A care-of address is an IP address associated with a mobile node while visiting a foreign network. The prefix of the care-of address is typically equal to the prefix of the visited network if using a CMIP. A mobile node may have one or more care-of addresses simultaneously. In case the mobile node is moving in a PMIP domain, the network will offer a mobile node specific prefix to the mobile node while moving in the PMIP domain, so that movement is transparent to the mobile node's IP layer. Accordingly, as described in the Technical Background section above, a proxy (mobile access gateway) in the network will register a new care-of address (proxy binding update) at the local mobility anchor managing the mobile node's movement in the PMIP domain to ensure proper routing of datagrams from/to the mobile node.

A home agent is a router or a functional entity providing a routing function on a mobile node's home network with which the mobile node registers its current care-of address(es). While the mobile node is away from home, the home agent may provide mobility service to the mobile node e.g. by intercepting packets on the home link destined to the mobile node's home address, encapsulating them, and tunneling them to one of or a some of the mobile node's registered care-of address(es). When using PMIP the local mobility anchor (LMA) can also be referred to as the mobile node's home agent in the PMIP domain.

An IPsec security association may be defined as a set of security information that two nodes or functional entities share in order to support secure communication. An IPsec security association may *inter alia* be established using so-called bootstrapping between the mobile node and its serving home agent. For example, a security association may include a data encryption algorithm, data encryption key(s) (e.g. a secret key or a public/private key pair, initialization vector(s), digital certificates, etc.). In CMIP there is typically a security association provided between a mobile node in a foreign network and its home agent in the home network. Thus, even if the mobile node is attached to a foreign network, encrypted and/or authenticated/ authorized communication between the home agent and the mobile node (e.g. through a secured tunnel) may be ensured. The security association is typically bound to the addresses of the endpoints, i.e. to the home agent address and the one of the mobile node's addresses (typically the home address).

One of the aspects of the invention is to enable the mobile node to detect the mobility management function used for the mobile node by the network. The basic approach is thereby to have the mobile node send a probe message to the network destined to the mobile node. Based on a modification of the probe message by one or more network nodes when being routed from mobile node through the network and back to the mobile node, the mobile node is capable of determining whether the network is using a network-based mobility management function or not.

According to one further aspect of the invention, the mobile node detects the mobility management function used by the network based on the number of hops traversed by the probe message when being routed from the mobile to the network and back to the mobile node, the mobile node can conclude on the mobility management function used by the network. In order to monitor the hop count of the probe message, the probe message may be sent as an IP packet. Based on the hop count field in the IP header of the probe message, the mobile node can conclude on the mobility management function used by the network.

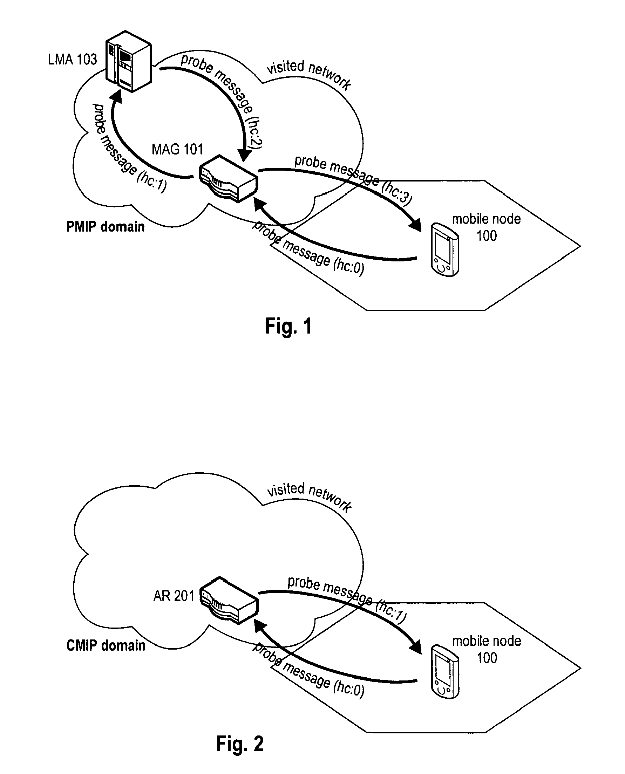

For example, when assuming that the network running PMIP (i.e. a network-based mobility management function is used for the mobile node), in a network architecture shown in Fig. 1, the probe message would at least be routed via the IP hops (MAG→LMA→MAG) - according to the PMIP protocol, a MAG by default forwards all data packets received from an attached mobile node to the LMA; only if the MAG is configured to apply local forwarding, this is not the case (see below). In case the network does not use network-based mobility, i.e. a client-based mobility management function (e.g. CMIP) needs to be used by the mobile node to ensure session continuity, the probe message would usually be routed over only one hop, namely the access router (AR) of the network back to the mobile node. Hence, the mobile node can detect whether the network runs PMIP or whether it needs to use CMIP based on the hop count of the received probe message which it earlier sent to its own IP address.

According to another aspect of the invention, the mobile node may detect the mobility management function used by the network based on a modification of the probe message by an intermediate network node in the network. For example, the probe message may include a flag or a field that is modified by the local mobility anchor or the mobile access gateway in case a network-based mobility management function is utilized. Instead of the hop count (or in addition thereto), the status of the flag or the field in the probe message indicates to the mobile node whether or not a network-based mobility management function is used by the network. In case of the network implementing PMIP, the mobile access gateway (MAG) or the local mobility anchor (LMA) could toggle a flag in the probe message that is indicating the presence of MAG or LMA respectively, i.e. the use of PMIP, while the access routers in a network not using PMIP will not toggle the flag in the probe message.

The probe message may be sent as an IP packet, i.e. comprising an IP header and payload. The payload size may zero, e.g. in case the probe message can be identified my means of the IP header. For instance the 'Traffic Class' or 'Flow Label' field of the IPv6 header could be modified in an intermediate network node (e.g., LMA or MAG) to indicate network-based mobility management. Another alternative is to include a flag to the payload section of the probe message that is toggled in an intermediate network node to indicate network-based mobility management.

The principles of the invention will be outlined in the following in further detail based on Fig. 1 and Fig. 2. Fig. 1 shows the routing of a probe message in an network assumed to use a network-based mobility function according to an exemplary embodiment of the invention. In this exemplary embodiment, the network-based mobility management function is PMIP and a mobile node 100 is initially attaching to a network of the PMIP domain.

In general, mobile node 100 may establish a PDN connection or IP session (e.g, upon initial attach) to any type of network offering IP connectivity, such as WiFi networks, WLAN networks, 3GPP-based networks like GSM, UMTS, LTE/SAE, etc. Establishing a PDN connection or IP session in this context means that mobile node 100 is not performing a handover from one access system to another or from one service area to another service area of the operator for a specific IP session, but attaches to the network and establishes a new Packet Data Network (PDN) connection respectively IP session with the network. In 3GPP, PDN connection establishment includes assignment of a new IP address or IP prefix to the mobile node. The invention can also be applied when multiple PDN connections per mobile node (referred to as user equipment UE in the 3GPP terminology) are allowed and the mobile node establishes an additional or a new PDN connection, which may use a different mobility management scheme than the existing PDN connection(s).

Returning to Fig. 1, mobile node 100 sends a probe message destined to itself to the network to detect the mobility management function used by the network for the mobile node. Assuming the network to belong to a PMIP domain, the IP layer entity receiving such probe message in the network is the so-called Mobile Access Gateway (MAG) 101 that may be assumed the IP layer access router of mobile node 100 in the network. When receiving an IP packet, i.e. the probe message in this example, from a mobile node, MAG 101 by default forwards the IP packet to the Local Mobility Anchor (LMA) 102 in the PMIP domain that serves as the home agent for mobile node 100 in the PMIP domain. MAG 101 increases the hop count in the IP header field by one prior to forwarding the probe message. LMA 102 receives the probe message and routes it back to mobile node 100 via MAG 101, both nodes increasing the hop count in the IP header. Accordingly, when sending the probe message to a network using PMIP for the mobile node, the hop count difference between the probe message sent by mobile node 100 and probe message returned to mobile node 100 is 3 (assuming the topology of Fig. 1 and no further intermediate IP hops/routers).

Fig. 2 shows the routing of a probe message in a network according to an exemplary embodiment of the invention assuming no network-based mobility function for the mobile node is used in the network. Due to the network not using a network-based mobility management function mobile node 100 needs to use a client-based mobility management function, here for exemplary purposes CMIP (MIPv4 or MIPv6), to ensure session continuity for a new IP session. Mobile node 100 is initially attaching to a network or is establishing an PDN connection or IP session or get assigned a new IP address by the network. Essentially, the starting point in Fig. 2 is similar to that in Fig. 1. However, the probe message sent and destined to mobile node 100 is received by the Access Router (AR) 201 of the network, which is routing the probe message back to mobile node 100 after having increased the hop count in the IP header of the probe message. Accordingly, under normal circumstances, the hop count difference between the probe message sent by mobile node 100 and probe message returned to mobile node 100 is 1 in case no network-based mobility is used by the network.

As indicated above, in some embodiments of the invention the mobile node considers this difference in the hop count between sending and receiving the probe message to detect the mobility management function used by the network for the mobile node and to take the appropriate steps as needed.

It should be further generally noted that mobile node 100 needs to be configured with an IP address valid in the network so as to be allowed sending the probe message according to the IP protocol specification and to have the probe message properly routed by the IP routers in the network. Accordingly, the mobile node may typically have to configure a valid IP address in the network before discovering the mobility management function supported by the network.

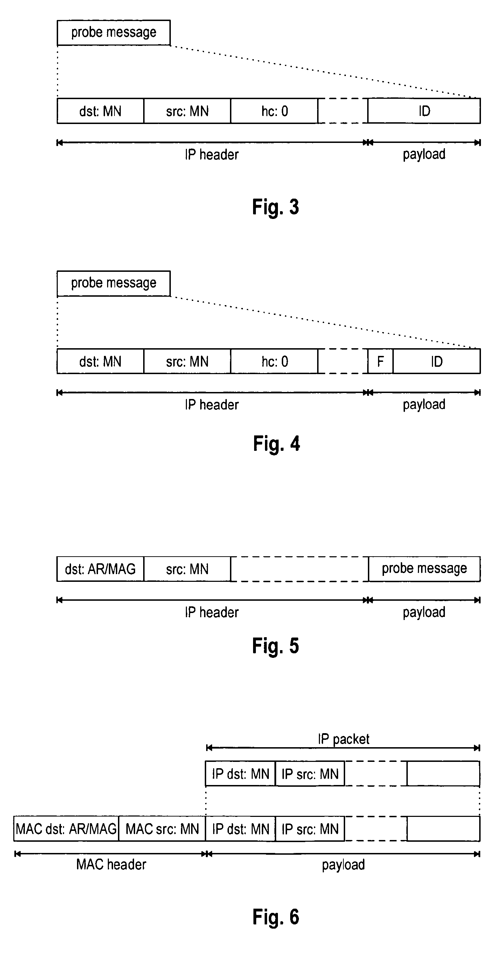

Turning now to Fig. 3 and Fig. 4 the configuration of the probe message according to different embodiments of the invention will be described in more detail. Fig. 3 and Fig. 4 show formats of a probe message as an IP packet according to different embodiments of the invention. Both message formats consist of an IP header and a payload section that together form the probe message, i.e. IP packet.

In both message formats the mobile node sets the IP source address (src: MN) and the IP destination address (dst: MN) of the probe message to its own IP address configured in the network. Further, the hop count field of the IP header may be initialized to a certain value (to be stored in the mobile node) or zero so that the mobile node can detect the change in the hop count field due to routing through the network.

In the message format shown in Fig. 3 and Fig. 4, the probe message may optionally contain an identifier ID (e.g. a nonce or sequence number) so that the mobile node can map the sent probe message to a received probe message. This may be useful if the mobile node is sending more than one probe message.

In a network using PMIP for the mobile node, the probe message would at least be routed over 3 IP hops (MAG 101, LMA 102, MAG 101), whereas in a network not using PMIP for the mobile node, the probe message would usually be routed over only 1 hop (AR 201) back to the mobile node (see Fig. 1 and Fig. 2). Hence, the mobile node can detect whether the network uses PMIP service based on the hop count of the received probe message, which the mobile node earlier sent to its own IP address. Therefore, if the initial hop count has not been set to zero the mobile node may subtracts the hop count of the received probe message and the corresponding (stored) initial hop count to find out the number of hops through which the probe message has been passed between its transmission by the mobile node and its reception. For example, if the difference is more than 1, the mobile node assumes that PMIP service is used. Otherwise it assumes that a plain IP access service without network-based mobility support.

Alternatively or in addition of the hop count field in the IP header, the probe message may include a flag F - see Fig. 4 - that is set by one of the intermediate nodes routing the probe message to indicate the use of a network-based mobility management function in the network. For example, returning to Fig. 1, MAG 101 or LMA 102 could set the flag F in the probe message to indicate that the network belongs to a PMIP domain and PMIP being used for mobility management.

Sending an IP packet from mobile node 100 with a IP destination address of mobile node 100 could be problematic depending on how the IP stack is implemented in the mobile node. It is therefore possible that the mobile node 's IP stack would route the packet to the mobile node incoming interface internally - i.e. without the probe message being sent and routed via mobile node 100's access router (MAG 101 or AR 201) in the network. To overcome this problem, according to a further embodiment of the invention mobile node 100 sends the probe message via an IP tunnel to the default router address in the network, i.e. its access router in the network.

Fig. 5 shows an exemplary format of such tunneled probe message. The probe message (IP packet) is encapsulated as a payload to another IP packet the header of which is indicating the IP address of access router in the network (dst: AR/MAG) as the IP destination address. The AR 201 or MAG 101 receiving the tunneled probe message would decapsulate the probe message and either route it back to mobile node 100 or forward the decapsulated probe message to LMA 102 as shown in Fig. 2 and Fig. 1 respectively.

Alternatively, in another embodiment of the invention, the mobile node's IP-to-Link Layer address mapping is modified so that it sets the Link Layer destination address of the probe message to the default router address of the access router in the network, i.e. the Link Layer (Layer 2) address of MAG 101 or AR 201, and the Link Layer source address of the probe message to the mobile node Link Layer source address. This is shown in Fig. 6.

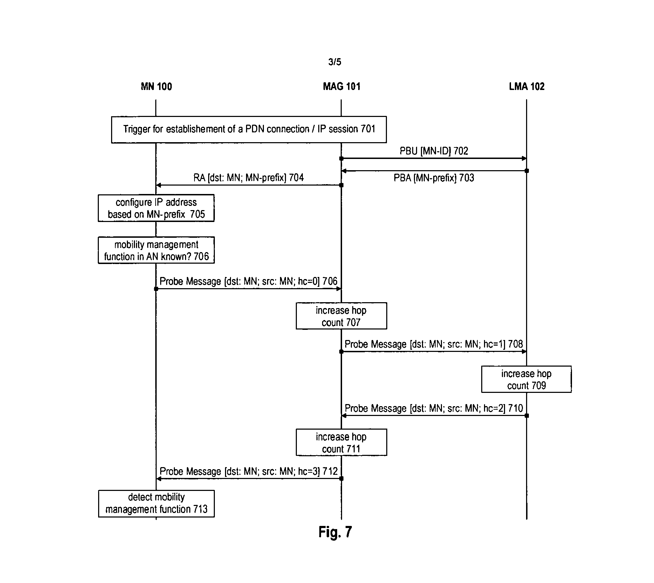

Fig. 7 shows an exemplary signaling procedure according to an embodiment of the invention, where mobile node 100 attaches to a network using a network-based mobility management to mobile node 100.

In a first step, mobile node 100 triggered to establish a PDN connection (or IP session) 701, e.g. upon initial attachment of the mobile node, to the access network (AN). This attachment procedure is assumed to establish Layer 2 connectivity between mobile node 100 and the network and an authentication of mobile node 100 in the network. Further, in this exemplary embodiment it is assumed that MAG 101 to which mobile node 100 attaches is provided with a mobile node's ID (MN-ID) that allows mobile node 100's identification within the network.

For example, if the access network is a trusted non-3GPP access network using PMIP according to 3GPP SAE specification (3GPP TS 23.402), an EAP authentication procedure is performed by the mobile node (UE). The MAG acts as the AAA client and forwards the EAP messages received from the mobile node in the Layer 2 authentication procedure to the 3GPP AAA server. Upon successful authentication, the AAA server returns amongst other information, the Packet Data Network-Gateway PDN-GW (LMA) address and the mobile node ID (NAI) to the MAG, which then is able to send a proxy binding update (PBU) to the local mobility anchor.

As the network is assumed to use PMIP in its service area, MAG 101 is also sending 702 a proxy binding update (PBU) with the mobile node 100's identifier (MN-ID) obtained during the authentication procedure to the "PMIP home agent", i.e. LMA 102. The proxy binding update message contains among others, a network access identifier (NAI) option to identify mobile node 100 (MN-ID), and a timestamp option as previously explained in the Technical Background section herein.

In PMIP every mobile node typically gets a unique prefix assigned, the so-called home prefix, that is used for mobility management in the PMIP domain. The mobile node's home prefix is not known by MAG 101 at the time of sending 702 the initial proxy binding update. Thus, when mobile node 100 initially attaches to the network through MAG 101 and LMA 102 received 702 the proxy binding update from MAG 101, LMA 102 assigns a unique prefix (MN-prefix) to mobile node 100 and provides 703 the prefix to MAG 101 within a proxy binding update acknowledgement (PBU) for advertisement 704 of the prefix by MAG 101 to mobile node 100 using a router advertisement (RA) destined to mobile node 100. Mobile node 100 uses the prefix (MN-prefix) received in the router advertisement to configure 705 an IP address based on the prefix.

However, mobile node 100 when initially attaching to the network is not aware whether the router advertisement RA received from the access router (here MAG 101) contains the local prefix of the network or a PMIP prefix anchored at the LMA - or in other words whether the network requires uses network-based mobility for the mobile or not. Generally, there may be some hints to the mobile node which allow the mobile node to "guess" the mobility management function used by the network. The evaluation of such hints is exemplified in step 706 where mobile node may optionally evaluate whether the mobility management function used by the network is somehow already known or can be guessed by mobile node 100. Details on this optional step will be discussed below.

In the example of Fig. 7, if mobile node 100 should be aware of a network-based mobility management function being used by the network by some means, it may immediately start IP communication as mobility is managed by the network (i.e. steps 706 to 713 can be skipped).

If mobile node 100 is uncertain or not aware of the mobility management function used by the network, it sends 706 a probe message to MAG 101 according to one of the formats shown in Fig. 3 and Fig. 4 above. The probe message may be tunneled to MAG 101 or IP-to-Link Layer mapping may map mobile node 100's IP address in the IP destination field of the probe message to the Link Layer address of MAG 101 to ensure that the probe message is not routed back to mobile node 100's IP layer internally.

MAG 101 passes 708 the probe message on to LMA 102 upon having increased 707 the hop count (hc=1) in the 'Hop Count' field of the probe message's IP header, as specified in RFC 5213. Similarly, LMA 102 detects the probe message being destined to the IP address of mobile node 100, increases 709 the hop count (hc=2) and routes 710 the probe message back to MAG 101. MAG 101 again increases 711 the hop count (hc=3) of the probe message and forwards 712 same to mobile node 100.

As explained above, mobile node 100 evaluates the hop count in the returned probe message (and the transmitted one as needed) to detect 713 the mobility management function. As the hop count is in this example indicating the probe massage having been passed through 3 hops, mobile node 100 concludes that the network is using a network-based mobility management function for the mobile node, i.e. the advertised 704 prefix being a PMIP prefix. As mobility management is thus handled by the network, mobile node 100 may thus immediately start IP communications.

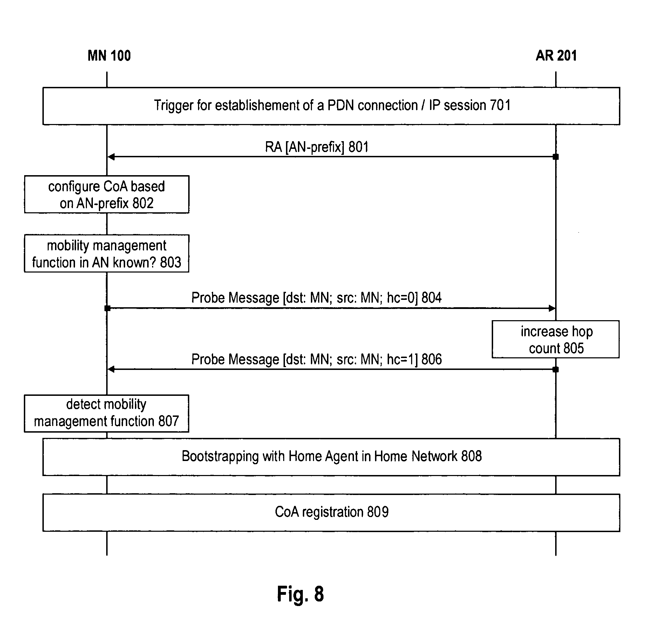

Fig. 8 shows an exemplary signaling procedure according to an embodiment of the invention, where a mobile node attaches to a network and uses client-based mobility management. In contrast to the exemplary embodiment shown in Fig. 7, it is assumed in this embodiment of the invention for exemplary purposes that the network is using no network-based mobility management function.

As in Fig. 7, mobile node 100 is assumed to establish 701 a PDN connection (or IP session) to the network first. Upon having attached to the network and has established IP layer connectivity, mobile node 100 receives 801 a router advertisement RA from the AR 201 that is providing mobile node 100 with the local address prefix (AN-prefix) of the network/domain served by AR 201. However, the mobile node does not know whether the prefix is anchored at an LMA in the local access network or at an LMA in the core network and hence the router advertisement RA is not sufficient for mobile node 100 to conclude on the mobility management function decided by the core network. In a next step, mobile node 100 configures 802 an IP address (i.e. care-of address - CoA) according to the advertised prefix.

After address configuration 802, the situation of mobile node 100 is similar as after address configuration 705 in Fig. 7. Similar to step 706 in Fig. 7, mobile node may optionally check 803, whether there are any hints to conclude on the network management function used by the network so that the additional signaling delay due to probing the network's mobility management function by means of the sending a probe message is unnecessary and steps 804 to 807 may be skipped.

Given that mobile node 100 is still unaware of the network's type of mobility support, mobile node 100 sends 804 a probe message according to one of the formats shown in Fig. 3 and Fig. 4 above to its access router to the network, here AR 201. The probe message may be tunneled to AR 201 or IP-to-Link Layer mapping may map mobile node 100's IP address in the IP destination field of the probe message to the Link Layer address of AR 201 to ensure that the probe message is not routed back to mobile node 100's IP layer internally.

AR 201 receives the probe message and sends 806 the probe message back to mobile node 100 after having increased 805 the hop count (hc=1).

Mobile node 100 receives the probe message and recognized 807 based on the hop count difference between sending and receiving the probe message that the network is using no network-based mobility function so that mobile node 100 must use a client based-mobility management scheme if it requires session continuity upon IP address change.

Accordingly, mobile node 100 performs 808 bootstrapping with its home agent in the home network, which includes discovering the serving home agent in the home network, setting up the IPsec security associations with the home agent for securing the Mobile IP signaling and configuring a corresponding home address at mobile node 100. Upon having bootstrapped the IP layer, mobile node 100 registers 809 its new IP address configures according to the local prefix AN-prefix as its new care-of address CoA at its serving home agent (so as to be reachable under its home address HoA and to allow for session continuity in case the care-of address is changing).

As indicated above with regard to steps 706 and 803, there may be situations in which a mobile node may be aware of the type of mobility management function used by a network upon attach or may guess same. One hint for the mobile node's guess could be the time between finishing the authentication procedure with the network and address assignment (see steps 704 and 801 in Fig. 7 and Fig. 8) is longer than a certain threshold time period. If the time span is longer, this could yield that the access router (i.e. MAG 101) sent a proxy binding update, had to await the answer of LMA 102 containing the PMIP prefix and could only advertise the PMIP prefix thereafter at earliest resulting in the "delayed" address assignment. Accordingly, mobile node 100 may conclude that PMIP is used in the network. In contrast, when using CMIP, the transmission of the router advertisement (see step 801, Fig. 8) for address assignment is not delayed by an additional prefix assignment from a network entity. Accordingly, the delay between authentication of mobile node 100 and receiving the first router advertisement should be short. Accordingly, if the first router advertisement is received within the threshold time period, mobile node 100 could conclude the network to use no network-based mobility.

An additional hint may be the way the router advertisement is addressed to the mobile node(s). Usually, unsolicited router advertisements are sent to the unsolicited multicast IPv6 address, while only solicited router advertisements are sent via unicast to the soliciting mobile nodes. The PMIPv6 specification requires a unique home prefix per mobile node, which means that a router advertisement message announcing a home prefix shall only be received by a single mobile node.

If the Layer 2 link between MAG and mobile node is a point-to-point link, any router advertisement sent on this link is only received by the mobile node, even if the destination address is a multicast address. If the Layer 2 link is a shared link, the destination IP address of the router advertisement should be set to a unicast address (e.g., the mobile node's link-local IP address) to ensure that only a single mobile node receives the home prefix. Hence, if the Layer 2 link is a shared link and a unsolicited router advertisement received by the mobile node has a unicast address as its destination address, the mobile node may consider this as a hint that network-based mobility is used by the network.

Another hint may be considering mobile node 100's "connection history". For instance, mobile node 100 could maintain (store) a history of previous sessions with networks or access router identifiers (e.g., IP address or MAG addresses) or assigned home prefixes and the respective mobility management function that has been used.

Another option may be that mobile node 100 performs a traceroute to find out the access router (AR/MAG) and/or LMA address if present. By comparing mobile node's prefix with discovered address(es) or the core network prefix with the discovered address(es), mobile node 100 conclude whether the prefix is a PMIP prefix anchored at the LMA in core network or not and could conclude on the mobility management function used in the network.

All these different options and hints towards use or non-use of network-based mobility in the network do of course not ensure a failsafe detection of the mobility management function. Hence, to be on the safe side, mobile node 100 could be configured to always send a probe message and to confirm optionally present hints on the mobility management function by means of the probe message. However, in another implementation, one or more hints that a network-based mobility management is used or not by the network may provide a sufficiently high level of certainty to conclude on the use of a network-based mobility management function, so that sending a probe message can be avoided.

Next, another exemplary and more specific embodiment related to a 3GPP LTE/SAE scenario will be outlined in more detail. As indicated in the Technical Background section, the home core network of a user equipment (a mobile node in the 3GPP terminology) is a 3GPP-based network. However, the user equipment may also attach to untrusted or trusted non-3GPP-based access networks (e.g., WLAN, Wimax, etc.) in the 3GPP LTE/SAE scenario. Although the user equipment may attach to a non-3GPP-based network, the IP Mobility Mode Selection (IPMS) function in the 3GPP core network is still determining the mobility management function to be used by the user equipment.

The following embodiment describes an optimization of the detection process. In case of the user equipment starts a new IP session or PDN connection, it may guess the result of IPMS by the hints described above and may perform either DSMIPv6 bootstrapping immediately, if having concluded that client-based management is selected by IPMS. If the user equipment's guess was correct, i.e., the home link detection performed during DSMIPv6 bootstrapping indicates that the user equipment is not at home, i.e. the use of a client-based mobility management function is thereby confirmed, then no probe message needs to be sent and DSMIP registration can immediately follow the bootstrapping. If on the other hand the user equipment concludes that a network-based mobility function is selected by IPMS, the user equipment sends a probe message to the network to confirm its assumption. In this case no bootstrapping is necessary if the user equipment's assumption was correct.

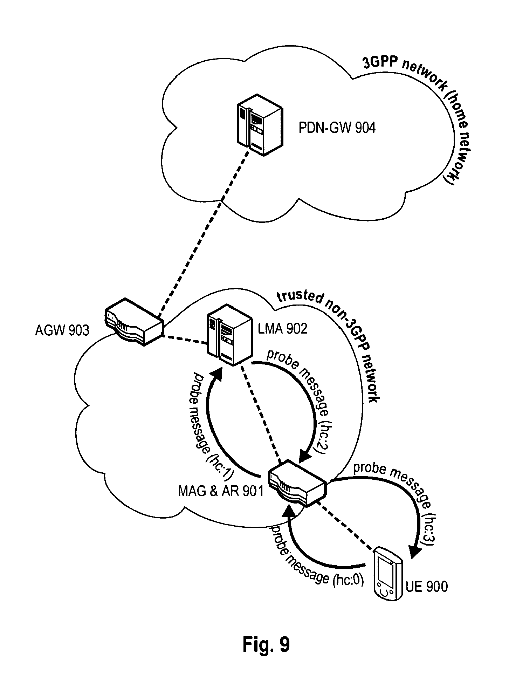

In this 3GPP SAE/LTE scenario, it may happen that a non-3GPP operator deploys a network-based mobility management function like a PMIP service for local mobility management within its access network, i.e., the LMA is a non-3GPP entity located in the non-3GPP access network instead of the 3GPP core network. This network-based mobility management function service is thus out of scope for 3GPP and hence would not be part of IPMS. Therefore, it may happen that IPMS has selected client-based mobility management, but the mobile node detects network-based mobility management as a result of sending a probe message. This scenario is shown exemplarily in Fig. 9 depicting a exemplary network architecture according to an embodiment of the invention, where a 3GPP-based user equipment (UE 900) is attaching to a trusted non-3GPP access network, which uses network-based mobility management locally within the access network.

In Fig. 9, UE 900 is initially attaching to a trusted non-3GPP based access network through an access router that is acting as a mobile access gateway (AR & MAG 901) to enable network-based mobility in the non-3GPP based access network. The non-3GPP based access network further provides LMA 902 functionality for enabling network-based mobility within the access network. The non-3GPP based access network is further connected to UE 900's home network (a 3GPP-based network) through an access gateway AGW 903 that is connecting to the packet gateway PDN-GW 904 in the 3GPP-based home network of UE 900, which includes the CMIP home agent serving UE 900 is located.

It is assumed that IPMS has selected client-based mobility management for UE 900, so that UE 900 should register its new care-of address at its home agent (PDN-GW 904) in the 3GPP core network. Assuming that UE 900 is trying to detect the applicable mobility management function to be used, UE 900 will send a probe message as discussed above. As the operator of the non-3GPP based access network also provides PMIP, the PMIP MAG function of AR & MAG 901 will route the probe message to LMA 902 which will return the probe message to UE 900 similar to the scenario discussed with respect to Fig. 1 and Fig 7 above. Accordingly, UE 900 will detect a network-based mobility management function although IPMS has selected client-based mobility.

To avoid such misdetection of the mobility function by the operator of a non-3GPP-based access network implementing a network-based mobility function unaware to IPMS, UE 900 could be enabled to detect whether LMA 902 is a 3GPP entity or not. If LMA 902 is a 3GPP entity, this means that it is known to IPMS and aware of the selected mobility management function. Hence, in case the probe message is passed through a network node with 3GPP LMA functionality, UE 900 can conclude that network-based mobility management has been selected by IPMS.

There are multiple possible ways to how UE 900 can detect whether LMA 902 is a 3GPP entity or not. In one example, UE 900 checks whether a handover within the non-3GPP results in a default router change or not. If there is a default router change within the non-3GPP network, it is likely that network-based mobility is used within the non-3GPP network, i.e. LMA 902 is a non-3GPP entity. Another possibility is that a 3GPP LMA can be specified to modify the probe messages, so that the mobile node can differentiate between 3GPP LMAs and (local) non-3GPP LMAs. For instance, a 3GPP LMA ,could be configured to always increase hop count by more than 3 or to add an indication to the probe message - for example the message format of the probe message could include a further flag that when (not) set by a LMA indicates the LMA to be 3GPP entity.

A further option is that UE 900 checks if the locally assigned address belongs to the 3GPP operator. If this address is part of the 3GPP operator's network prefixes, the LMA is 3GPP entity. The mobile node can find out the 3GPP operator prefixes by checking IANA registrations at http://www.iana.org/numbers. Moreover, another possibility is that UE 900 sends a traceroute for its own IP address to find out intermediate router addresses including the LMA's address. If none of intermediate router addresses is part of 3GPP operator's network prefixes, there is no 3GPP LMA involved.

The options and possibilities to detect of whether the LMA is a 3GPP entity or not, i.e. whether the detected mobility management function is indeed the one selected by IPMS may also be combined as necessary.

Another issue that may cause problems using the mobility management function detection mechanisms proposed herein can be local MAG routing. PMIPv6 supports local MAG routing ("EnableMAGLocalRouting" option) which means that packets for destinations that are attached to the same MAG than the source will be delivered locally without routing over the LMA. With local MAG routing enabled, also in a PMIP domain a probe message would thus be routed from the MAG back to the mobile node without traversing the LMA. This would result in a hop count difference of 1 even if PMIP service is used in the network which would not allow the mobile node to distinguish whether or not network-based mobility is used by the network.

According to a further embodiment of the invention, the potential problems caused by local MAG forwarding in a PMIP domain are overcome. Multiple possibilities exist how to avoid this problem. One option is that the mobile node signals to the network that it doesn't want local forwarding, at least not for probe messages. This may be done by separate signaling or by including a flag to the probe message that is turning off local MAG forwarding for the message when set. Another possibility is that the MAGs are configured to not apply local forwarding to probe messages, but only to data packets.

A further possibility to cope with local MAG routing is that the mobile node sends a probe message with this type of message, if the mobile node knows that certain types of messages are not subject to local forwarding, such as DNS message (UDP/TCP messages with port number 53),

Another option would be that local forwarding for packets of a particular mobile node is only enabled in the MAG some time after establishing a new IP session or PDN connection by the respective mobile node, since PMIP detection is mainly required just after establishing a new IP session. An even further option may be that the MAG is modified to increase the hop count in the probe message by 3 so that also with local forwarding enabled, the hop count difference of the probe message is different to the hop count difference of a probe message being returned to the mobile node in an network using no network-based mobility management.

Another possibility to cope with local MAG forwarding is that the mobile node only sends probe messages to detect the mobility management function used by the network, if the mobile node knows that no local forwarding is enabled in the MAG, and use other less efficient detection means such as home link detection using DSMIP bootstrapping in other cases. Whether local forwarding is enabled in a specific MAG or not may be known to the mobile node, e.g. from the operator policy, from previous attachments to the network or by other means. For instance, if the mobile node has assumed PMIP support based on the probe message result, but notices that its connection breaks after a handover, the mobile node knows that its assumption was wrong and that no PMIP is used in the network. Then, the mobile node can assume that local forwarding is used in this network and can store this information for later decisions.

As has become apparent, there are numerous options how to cope with potential problems resulting from local forwarding of packets by the mobile access gateway in a PMIP domain. It should be noted that of course the individual countermeasures may be readily combined with each other.

Another embodiment of the invention relates to the implementation of the above described various embodiments using hardware and software. It is recognized that the various embodiments of the invention may be implemented or performed using computing devices (processors or processing units). A computing device, processor or processing unit may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for detecting the IP mobility management function used by an network, comprising the following steps performed by a mobile node:
transmitting a probe message to the network in form of an IP packet, wherein the IP header of the probe message destines the probe message to an IP address of the mobile terminal,
receiving the probe message from the network, and
detecting, based on a comparison of the transmitted probe message and the received probe message whether the network uses a network-based mobility management function for the mobile node or not.

2. The method according to claim 1, wherein the comparison of the transmitted probe message and the received probe message analyses the difference in the IP hop count fields of the IP header in the transmitted probe message and the received probe message.

3. The method according to claim 1 or 2, wherein the comparison of the transmitted probe message and the received probe message comprises checking whether an indication of the use of a network-based mobility management function was added to the probe message when routed through a network entity applying a network-based mobility management function for the mobile node.

4. The method according to one of claims 1 to 3, further comprising the step of initiating a client-based mobility management bootstrapping and address registration procedure, in response to detecting the network to use no network-based mobility management function for the mobile node.

5. The method according to one of claims 1 to 4, wherein the probe message is tunneled to an access router in the network to which the mobile node is attached.

6. The method according to one of claims 1 to 5, wherein the probe message is sent to a link layer address of an access router in the network to which the mobile node is attached.

7. The method according to one of claims 1 to 6, wherein detecting whether the network uses a network-based mobility management function for the mobile node or not is based on the difference of the hop count between transmitting and receiving the probe message by the mobile node.

8. The method according to claim 7, wherein the network-based mobility management function is detected, if the hop count increased by more than a threshold value between transmitting and receiving the probe message at the mobile node, and client-based mobility management function is detected otherwise.

9. The method according to one of claims 1 to 8, wherein the probe message is sent by the mobile node only if one or more of the following conditions are met:
- the time period between authentication of the mobile node by the network and address assignment to the mobile node by the network is longer than a threshold time period,
- the mobility management function offered is know from previous attachment to the network

10. The method according to one of claims 1 to 9, further comprising the steps of:
performing an authentication procedure with the network to authenticate the mobile node in the network upon attachment thereto,
wherein the authentication is performed prior to establishing IP layer connectivity to the network.

11. The method according to one of claims 1 to 10, wherein the method is performed upon initial attachment of the mobile node to the network or upon establishing a new IP session or upon assignment of a new IP address by the network.

12. A mobile node for detecting the IP mobility management function used by a network, the mobile node comprising:
a transmitter for transmitting a probe message with IP header to the network, wherein the probe message is destined to an IP address of the mobile terminal,
a receiver receiving the probe message from the network, and
a processing unit for detecting based on a comparison of the transmitted probe message and the received probe message, whether the network uses a network-based mobility management function for the mobile node or not.

13. The mobile node according to claim 12, further comprising means to perform the steps according to one of claims 2 to 11.

14. A computer-readable medium storing instructions that, when executed by a processor of the mobile node, cause the mobile node to detect the IP mobility management function used by an network for the mobile node, by:
transmitting a probe message with IP header to the network, wherein the probe message is destined to an IP address of the mobile terminal,
receiving the probe message from the network, and
detecting based on a comparison of the transmitted probe message and the received probe message whether the network uses a network-based mobility management function for the mobile node or not.

15. The computer-readable medium according to claim 14, further storing instructions that, when executed by the processor of the mobile node, cause the mobile node to perform the steps according to one of claims 2 to 11.
